# EUROPÄISCHE PATENTSCHRIFT

(11) **EP 3 652 883 B1**
(45) Veröffentlichungstag und Bekanntmachung des Hinweises auf die Patenterteilung: **08.09.2021**
(21) Anmeldenummer: 18737892.2
(22) Anmeldetag: 05.07.2018
(51) Int. Cl.: H04L 9/08, H04L 9/32

(54) **VERFAHREN UND VORRICHTUNG ZUM ÜBERTRAGEN PERSÖNLICHER DATEN**
METHOD AND DEVICE FOR TRANSMITTING PERSONAL DATA
PROCÉDÉ ET DISPOSITIF POUR LA TRANSMISSION DE DONNÉES PERSONNELLES

(30) Priorität: 12.07.2017 DE 102017211912
(43) Veröffentlichungstag der Anmeldung: 20.05.2020
(73) Patentinhaber: Robert Bosch GmbH, 70442 Stuttgart (DE)
(72) Erfinder: SCHARMANN, Nik, 74321 Bietigheim - Bissingen (DE); KONRAD-MAUSSER, Johanna, 71679 Asperg (DE); SHOKROLLAHI, Jamshid, 71642 Ludwigsburg (DE)
(86) Internationale Anmeldenummer: PCT/EP2018/068238
(87) Internationale Veröffentlichungsnummer: WO 2019/011777

(56) Entgegenhaltungen:
- US-A1- 2016 149 878
- ADI SHAMIR: "How to share a secret", COMMUNICATIONS OF THE ACM, ASSOCIATION FOR COMPUTING MACHINERY, INC, UNITED STATES, Bd. 22, Nr. 11, 1. November 1979 (1979-11-01), Seiten 612-613, XP058098024, ISSN: 0001-0782, DOI: 10.1145/359168.359176
- SIANI PEARSON ET AL: "Sticky Policies: An Approach for Managing Privacy across Multiple Parties", COMPUTER, IEEE COMPUTER SOCIETY, USA, Bd. 44, Nr. 9, 1. September 2011 (2011-09-01), Seiten 60-68, XP011359830, ISSN: 0018-9162, DOI: 10.1109/MC.2011.225

## Beschreibung

### Stand der Technik

Die Erfindung geht aus von einer Vorrichtung oder einem Verfahren nach Gattung der unabhängigen Ansprüche. Gegenstand der vorliegenden Erfindung ist auch ein Computerprogramm.

Private Daten entwickeln sich zu einem wichtigen Kapital der Anwender. Daher gibt es einen großen Wettkampf zwischen unterschiedlichen Dienstanbietern und Herstellern, um Zugang zu diesen Daten zu bekommen. Die Daten können verwendet werden, um die Qualität der angebotenen Dienste zu verbessern und, um unterschiedliche Markt- oder Konsumtrends vorherzusagen. Somit ist es für die Anwender natürlich, dass sie Geld für diese Ressourcen erwarten. US 2016/149878 A1 beschreibt ein Verfahren zum Übertragen persönlicher Daten von Sensorgeräten. Die Daten werden mittels eines sog. Secret-Sharing Algorithmus geschützt.

### Offenbarung der Erfindung

Vor diesem Hintergrund werden mit dem hier vorgestellten Ansatz ein Verfahren zum Übertragen persönlicher Daten, weiterhin eine Vorrichtung, die dieses Verfahren verwendet, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Vorteilhafterweise können mit dem hier beschriebenen Ansatz nicht nur von einem Anwender erzeugte persönliche Daten übertragen werden, sondern auch Daten übertragen werden, die durch Sensoren gemessen werden. Durch das Übertragen solcher Daten kann ein finanzieller Nutzen für die Eigentümer dieser Sensoren bewirkt werden. Vorteilhafterweise kann dabei für die Käufer dieser Daten sichergestellt werden, dass die Daten von dem Datenverkäufer nicht an mehr als einen Käufer verkauft werden. Indem eine geeignete Gegenmaßnahme für eine solche Bedrohung aufgebaut wird, kann vermieden werden, dass die Käufer ihre Vorteile gegenüber ihren Wettbewerbern verlieren. Dies ist ähnlich zum doppelten Ausgeben von digitalen Geld, was durch das Bitcoin Protokoll angesprochen wird. In dem Problem des doppelten Ausgebens muss dem Käufer versichert werden, dass das erhaltene Geld nicht bereits durch denjenigen verbraucht wurde, der ihn bezahlt hat. Beim digitalen Geld wird irgendwann ersichtlich, dass eine Münze, um die es bei einer Transaktion geht, bereits benutzt wurde. Dadurch wird der Empfänger der Münze dazu motiviert, eine solche Transaktion abzulehnen.

Der hier vorgestellte Ansatz ist daher ähnlich zu sogenannten "sticky policy" Lösungen zum Schutz der Privatheit von Daten. Solche Lösungen basieren auf Grundsätzen die spezifiziert werden, um einem Empfänger die Öffnung eines verschlüsselten Datenpakets zu ermöglichen. Die Erfüllung dieser Grundsätze wird durch eine sichere Hardware verifiziert, die den Verschlüsselungsschlüssel für das Datenpaket speichert und den Schlüssel nur freigibt, wenn die entsprechenden Grundsätze erfüllt sind. Dabei ist zu beachten, dass die Sicherheit dieses Verfahrens auf dem Vertrauen auf die einzige sichere Hardware basiert, die den Entschlüsselungsschlüssel speichert. Wenn dieses Teil des Systems ausfällt oder mit dem Käufer zusammenarbeitet, kollabiert das gesamte System. Der hier vorgeschlagene Ansatz ist ähnlich zu den "sticky policy" Lösungen, basiert jedoch auf der Sicherheit mehrerer Teile zur gleichen Zeit, so dass der Käufer mit mehreren Parteien zusammenarbeiten müsste, um betrügen zu können. Es wird angenommen, dass es keinen direkten Kanal zwischen dem Käufer und dem Verkäufer gibt, andererseits könnte die Sicherheit des Systems versagen.

Ein Verfahren zum Übertragen persönlicher Daten umfasst die folgenden Schritte:
Empfangen einer durch ein elektrisches Signal repräsentierten Anfrage einer Sensoreinrichtung zum Erfassen persönlicher Daten über eine Sensorschnittstelle einer Gruppe von Wächtereinrichtungen zu der Sensoreinrichtung;
Erzeugen eines Verschlüsselungsschlüssels sowie von Anteilen eines Entschlüsselungsschlüssels unter Verwendung der Gruppe von Wächtereinrichtungen, ansprechend auf das Empfangen der Anfrage, wobei der Entschlüsselungsschlüssel unter Verwendung eines Verfahrens zur Geheimnisteilung auf die Anteile aufgeteilt wird und jedem der Gruppe von Wächtereinrichtungen einer der Anteile zugewiesen wird;
Bereitstellen des Verschlüsselungsschlüssels an die Sensoreinrichtung über die Sensorschnittstelle; und
Bereitstellen der Anteile des Entschlüsselungsschlüssels an eine Endeinrichtung über eine Endschnittstelle der Gruppe von Wächtereinrichtungen zu der Endeinrichtung.

Bei der Sensoreinrichtung kann es sich um einen bekannten Sensor handeln, der beispielsweise von einem Anwender getragen werden kann. Bei einem Sensor kann es sich beispielsweise um einen Temperatursensor, einen Pulsmesser, oder eine Kamera handeln. Bei einem elektrischen Signal kann es sich um ein Nachrichtensignal handeln. Beispielsweise kann der Sensor ausgebildet sein, um Daten über eine Tätigkeit, eine Körperfunktion oder ein Umfeld des Anwenders als die persönlichen Daten zu erfassen. Unter der Sensorschnittstelle kann eine analoge oder digitale Schnittstelle eines Geräts verstanden werden. Die Sensorschnittstelle kann drahtlos oder drahtgebunden ausgeführt sein. Die Gruppe von Wächtereinrichtungen kann zumindest zwei, drei oder mehr Wächtereinrichtungen umfassen. Die Wächtereinrichtungen können als zueinander separat ausgeführte elektrische Geräte ausgeführt sein. Bei einem elektrischen Gerät kann es sich um einen Computer handeln. Die Wächtereinrichtungen werden auch als Wächter bezeichnet. Die Anteile des Entschlüsselungsschlüssels müssen unterschiedliche Teile darstellen, aus denen der Entschlüsselungsschlüssel zusammengesetzt werden kann. Die Wächtereinrichtungen können beispielsweise über elektrische Leitungen oder drahtlos miteinander verbunden sein, um die Aufteilung des Entschlüsselungsschlüssels untereinander organisieren zu können. Unter einem Verfahren zur Geheimnisteilung kann ein sogenanntes "Secure Secret Sharing" verstanden werden. Durch die Verwendung mehrerer Wächtereinrichtungen kann verhindert werden, dass der Entschlüsselungsschlüssel durch Kompromittieren einer Wächtereinrichtung ermittelt werden kann. Unter einer Endeinrichtung kann ein elektrisches Gerät verstanden werden. Bei einem elektrischen Gerät kann es sich um einen Computer handeln. Die Endeinrichtung kann auch als Käufereinrichtung zum erstmaligen Kaufen der persönlichen Daten über die Endschnittstelle, auch als Käuferschnittstelle bezeichnet, bezeichnet werden. Auch kann die Käufereinrichtung kurz als Käufer bezeichnet werden. Durch das Verfahren kann sichergestellt werden, dass die persönlichen Daten nicht mehrfach verkauft werden können. Falls die Sensoreinrichtung versucht, die gleichen Daten an einen weiteren Käufer zu veräußern, werden die Wächtereinrichtungen diese Transaktion blockieren. Solange wenige der Wächtereinrichtungen - die Anzahl hängt dabei vom Threshold-Verfahren ab - kompromittiert sind, werden alle nicht kompromittierten Wächtereinrichtungen sich weigern ihre Anteile des Entschlüsselungsschlüssels an den weiteren Käufer weiterzugeben.

Das Generieren der Anteile im Schritt des Erzeugens kann mit der Hilfe jedes beliebigen "Secure Secret Sharing" Verfahrens erfolgen. Ein "Secure Secret Sharing" Verfahren verteilt ein Geheimnis in den Anteilen, so dass nur mit dem Zugriff auf allen Anteile das Geheimnis wieder konstruiert werden kann. In dem allgemeinen "Threshold Secure Secret Sharing" Verfahren wird das Geheimnis in n Anteile aufgeteilt, so dass mit dem Zugriff auf jeder Teilmenge mit k < n Elementen, das Geheimnis rekonstruierbar ist.

Ein Beispiel für "Threshold Secure Secret Sharing" Verfahren ist das "Shamir Verfahren". In diesem Verfahren wird ein Polynom von Grad k-1 so ausgewählt, dass der Konstant Wert gleich das Geheimnis ist, aber allen anderen Koeffizienten zufällig ausgewählt werden. D.h. f(x) = rₖ₋₁x^{k-1} + rₖ₋₂x^{k-2} + ... + r₁x + p wobei allen r Koeffizienten zufällig ausgewählt sind und p das Geheimnis ist.

Bei der Aufteilung werden n unterschiedliche Werte, z.B., alle Zahlen von 1 bis n ausgewählt. Jeder Anteil besteht aus dem Wert i und die Auswertung des Polynoms f(x) an der Stelle i. D.h. Sᵢ = (i, f(i)).

Mit dem Wissen der k Anteile ist es möglich, die Koeffizienten des Polynoms durch z.B. Lagrange Interpolation zu berechnen und damit auf das Geheimnis zu kommen.

Die Bereitstellung erfolgt damit, dass der Anteil (i, f(i)) an den Wächter i geschickt wird. Der Käufer wird wiederum den Wächter bitten, den Anteil an ihn zu schicken.

Der Käufer soll zumindest k Anteile bekommen, um das Geheimnis oder den Entschlüsselungsschlüssel zu rekonstruieren und auf die Daten zuzugreifen. Die Methode wird ihre Sicherheit erreichen, solange mindestens k Wächter ihre Aufgabe richtig erledigen und ihren Anteil nicht an den Käufer weiter leiten, wenn sie erkennen, dass die Daten vorher weitergegeben worden sind oder eine andere Bedingung nicht erfüllt wird, z.B., wenn die Wächter den Verdacht haben, dass der Käufer die Daten ausnutzen werde.

Damit kann z.B. vermieden werden, dass ein einzelner Wächter kompromittiert wird und die Daten weiter verkauft.

Somit kann das Verfahren einen Schritt des Blockierens des Bereitstellens der Anteile des Entschlüsselungsschlüssels an die Endeinrichtung umfassen, wenn die persönlichen Daten bereits an eine weitere Endeinrichtung veräußert wurden. Durch das Blockieren kann sichergestellt werden, dass die Daten nach einem erstmaligen Verkaufen nicht nochmals verkauft werden können. Um zu erkennen, ob die persönlichen Daten bereits verkauft wurden, können die persönlichen Daten mit einem eindeutigen Zeiger versehen sein, der seitens der Endeinrichtung zum einen zum Abrufen der persönlichen Daten als auch zum Abrufen der Anteile des Entschlüsselungsschlüssels verwendet werden kann. Auf diese Weise können die Wächtereinrichtungen unter Verwendung des Zeigers überprüfen, ob der aktuelle Verkauf der persönlichen Daten zulässig ist, und abhängig von einem Ergebnis der Überprüfung, das Bereitstellen der Anteile des Entschlüsselungsschlüssels freigeben oder blockieren.

Das Verfahren kann einen Schritt des Generierens verschlüsselter persönlicher Daten durch die Sensoreinrichtung umfassen. Dies kann unter Verwendung der persönlichen Daten und des Verschlüsselungsschlüssels erfolgen. Auf diese Weise können die Daten unter Verwendung des den Wächtereinrichtungen bekannten Schlüssels verschlüsselt werden.

In einem Schritt des Empfangens können die verschlüsselten persönlichen Daten in Form elektrischer Signale über eine Eingangsschnittstelle einer Datenbretteinrichtung zu der Sensoreinrichtung empfangen werden. Die Datenbretteinrichtung kann als ein oder ein Verbund mehrerer elektrischer Geräte realisiert sein. Beispielsweise kann die Datenbretteinrichtung ein Computer sein. Die Datenbretteinrichtung kann ausgebildet sein, um die verschlüsselten persönlichen Daten durchzuleiten oder zwischen zu speichern. In einem Schritt des Bereitstellens können die verschlüsselten persönlichen Daten über eine Ausgangsschnittstelle der Datenbretteinrichtung zu der Endeinrichtung bereitgestellt werden. Durch die Datenbretteinrichtung kann ein direkter Kontakt zwischen der Sensoreinrichtung und der Endeinrichtung vermieden werden.

In einem Schritt des Entschlüsselns können die verschlüsselten persönlichen Daten unter Verwendung der Anteile des Entschlüsselungsschlüssels durch die Endeinrichtung entschlüsselt werden. Auf diese Weise kann die Endeinrichtung an die persönlichen Daten gelangen.

In einem Schritt des Ausgebens kann eine Bezahlanweisung, beispielswiese in Form eines elektrischen Signals, durch die Endeinrichtung ausgegeben werden. Auf diese Weise können die persönlichen Daten von der Endeinrichtung bezahlt werden.

In einem Schritt des Empfangens kann die Bezahlanweisung, beispielsweise in Form eines elektrischen Signals, durch eine Transaktionseinrichtung über eine Schnittstelle der Transaktionseinrichtung zu der Endeinrichtung empfangen werden. Beispielsweise kann die Transaktionseinrichtung ausgebildet sein, um die Bezahlanweisung zu prüfen und eine der Bezahlanweisung entsprechende Gutschrift für einen Eigentümer der Sensoreinrichtung generieren. Bei der Bezahleinrichtung kann es sich um ein elektrisches Gerät, beispielsweise einen Computer handeln.

Dieses Verfahren kann beispielsweise in Software oder Hardware oder in einer Mischform aus Software und Hardware beispielsweise in einem oder verteilt auf mehrere Geräte verteilt implementiert sein.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend zumindest ein elektrisches Gerät verstanden werden, das elektrische Signale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes sind in den Zeichnungen dargestellt und in der nachfolgenden Beschreibung näher erläutert. Es zeigt:
Fig. 1 eine Darstellung einer Vorrichtung zum Übertragen persönlicher Daten gemäß einem Ausführungsbeispiel; und
Fig. 2 ein Ablaufdiagramm eines Verfahrens zum Übertragen persönlicher Daten gemäß einem Ausführungsbeispiel.

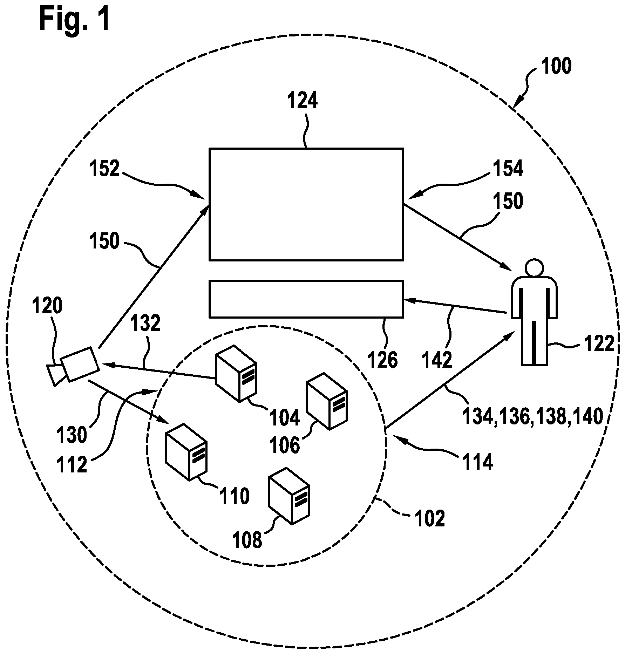

Fig. 1 zeigt eine Darstellung einer Vorrichtung 100 zum Übertragen persönlicher Daten gemäß einem Ausführungsbeispiel. Die Vorrichtung 100 umfasst zumindest eine Gruppe 102 von Wächtereinrichtungen 104, 106, 108, 110, hier beispielsweise von vier auch als Wächter bezeichneten Wächtereinrichtungen 104, 106, 108, 110. Die Gruppe 102 weist eine Sensorschnittstelle 112 und eine Endschnittstelle 114 auf.

Gemäß einem Ausführungsbeispiel ist die Vorrichtung 100 als ein System ausgeführt, das neben der Gruppe 102 ferner zumindest eine Sensoreinrichtung 120, zumindest eine Endeinrichtung 122 sowie eine Datenbretteinrichtung 124 und eine Transaktionseinrichtung 126 oder ferner zumindest eine der genannten Einrichtungen 120, 122, 124, 126 umfasst.

Die Sensoreinrichtung 120 ist ausgebildet, um persönlicher Daten eines Anwenders zu erfassen. Beispielsweise kann die Sensoreinrichtung 120 in ein von dem Anwender tragbares Armband integriert sein. Die Sensoreinrichtung 120 ist ausgebildet, um eine Anfrage 130 an die Gruppe 102 auszusenden. Die Gruppe 102 ist ausgebildet, um die Anfrage 130 über die Sensorschnittstelle 112 zu empfangen. Ansprechend auf den Empfang der Anfrage 130 ist die Gruppe ausgebildet, um einen Verschlüsselungsschlüssels 132 zu erzeugen und Anteile 134, 136, 138, 140 eines Entschlüsselungsschlüssels zu erzeugen. Der Verschlüsselungsschlüssel 132 kann unter Verwendung einer oder mehrerer der Wächtereinrichtungen 104, 106, 108, 110 erzeugt werden. Die Anteile 134, 136, 138, 140 des Entschlüsselungsschlüssels können unter Verwendung einer oder mehrerer der Wächtereinrichtungen 104, 106, 108, 110 erzeugt werden. Zudem können die Anteile 134, 136, 138, 140 von einer oder mehrerer der Wächtereinrichtungen 104, 106, 108, 110 gespeichert werden. Beispielsweise ist in jeder der Wächtereinrichtungen 104, 106, 108, 110 ein anderer Anteil 134, 136, 138, 140 des Entschlüsselungsschlüssels gespeichert. Die Gruppe 102 ist ausgebildet, um den erzeugten Verschlüsselungsschlüssel 132 über die Sensorschnittstelle 112 an die Sensoreinrichtung 120 bereitzustellen. Ferner ist die Gruppe 102 ausgebildet, um die Anteile 134, 136, 138, 140 des Entschlüsselungsschlüssels über die Endschnittstelle 114 an die Endeinrichtung 122 auszusenden. Die Wächtereinrichtungen 104, 106, 108, 110 können örtlich getrennt voneinander, beispielsweise in unterschiedlichen Gebäuden, oder benachbart zueinander angeordnet sein. Gemäß einem Ausführungsbeispiel ist jede der Wächtereinrichtungen 104, 106, 108, 110 als ein Server ausgeführt. Die Wächtereinrichtungen 104, 106, 108, 110 sind gemäß einem Ausführungsbeispiel über ein Datenübertragungsnetzwerk miteinander verbunden.

Die Endeinrichtung 122, beispielsweise in Form eines einer Person zugeordneten elektrischen Geräts, ist ausgebildet, um die von der Sensoreinrichtung 120 erfassten persönlichen Daten zu kaufen. Gemäß einem Ausführungsbeispiel erhält die Endeinrichtung 122 die Anteile 134, 136, 138, 140 des Entschlüsselungsschlüssels erst nachdem die Endeinrichtung 122 eine Bezahlanweisung 142 an die Transaktionseinrichtung 126 übertragen hat. Dazu sind die Wächtereinrichtungen 104, 106, 108, 110 gemäß einem Ausführungsbeispiel ausgebildet, um die Bezahlanweisung 142 zu überprüfen und die Anteile 134, 136, 138 erst nach einem positiven Ergebnis der Überprüfung der Bezahlanweisung 142 an die Endeinrichtung 122 bereitzustellen.

Die Sensoreinrichtung 120 ist ausgebildet, um die erfassten persönlichen Daten nach Empfang des Verschlüsselungsschlüssels 132 unter Verwendung des Verschlüsselungsschlüssels 132 zu verschlüsseln, um verschlüsselte persönliche Daten 150 zu erhalten. Die Sensoreinrichtung 120 ist ausgebildet, um die verschlüsselten persönlichen Daten 150 an die Datenbretteinrichtung 124 zu senden. Die Datenbretteinrichtung 124 ist ausgebildet, um die verschlüsselten persönlichen Daten 150 über eine Eingangsschnittstelle 152 zu empfangen und gemäß einem Ausführungsbeispiel zwischen zu speichern und/oder an die Endeinrichtung 122 zu übertragen.

Gemäß einem Ausführungsbeispiel ist die Endeinrichtung 122 ausgebildet, um die verschlüsselten persönlichen Daten 150 über eine Ausgangsschnittstelle 154 aus der Datenbretteinrichtung 124 auszulesen.

Die Endeinrichtung 122 ist ausgebildet, um die verschlüsselten persönlichen Daten 150 zu entschlüsseln, um die ursprünglichen persönlichen Daten zurückzugewinnen. Die Endeinrichtung 122 ist dabei ausgebildet, um die verschlüsselten persönlichen Daten 150 unter Verwendung der von der Gruppe 102 empfangenen Anteile 134, 136, 138, 140 des Entschlüsselungsschlüssels zu entschlüsseln.

Einzelne oder alle der Schnittstellen 112, 114, 152, 154 zwischen den Einrichtungen 102, 120, 122, 124, 126 können als drahtlose Datenübertragungsschnittstellen ausgeführt sein. Alternativ können einzelne oder alle der Schnittstellen 112, 114, 152, 154 zwischen den Einrichtungen 102, 120, 122, 124, 126 können als leitungsgebundene Datenübertragungsschnittstellen ausgeführt sein.

Im Folgenden werden anhand der Fig. 1 Ausführungsbeispiele des Verfahrens näher beschrieben.

Das Verfahren basiert auf Schwellenwert-Verschlüsselungsschemas öffentlicher Schlüssel, sogenannten "threshold public key encrytion schemes". Ein solches Schema besteht aus einem öffentlichen Verschlüsselungsschlüssel 132, der verwendet werden kann, um Daten zu verschlüsseln, sowie aus n individuellen Entschlüsselungsschlüsseln 134, 136, 138, 140, im Vorangehenden auch als Anteile 134, 136, 138, 140 eines Entschlüsselungsschlüssels bezeichnet, sodass zumindest k (k <= n) der Entschlüsselungsschlüssel 134, 136, 138, 140 nötig sind, um den Schlüssel 132 oder die mit dem Schlüssel 132 verschlüsselten Daten 150 zu entschlüsseln.

Dazu zeigt Fig. 1 den allgemeinen Überblick des Verfahrens gemäß einem Ausführungsbeispiel. Als erstes erfolgt die Anforderung des Verschlüsselungsschlüssels 132, in Fig. 1 dargestellt durch die Anfrage 130. Als zweites erfolgt das Senden des Verschlüsselungsschlüssels 132 an die Sensoreinrichtung 120. Als drittes erfolgt das Schreiben der verschlüsselten Daten 150 in die Datenbretteinrichtung 124. Als viertes erfolgt die Bezahlung, in Fig. 1 beispielhaft dargestellt durch die Bezahlanweisung 142. Als fünftes erfolgt das Erhalten der Teile 134, 136, 138, 140 des Entschlüsselungsschlüssels. Dabei erhält die Endeinrichtung 122 die Teile 134, 136, 138, 140. Als sechstes erfolgt das Lesen der Daten 150 und das Entschlüsseln derselben durch die Endeinrichtung 122.

Gemäß einem Ausführungsbeispiel überwachen die Wächter 104, 106, 108, 110 zusammen das System 100, um den Markt gegenüber Betrügereien zu schützen.

Als erstes beantragt dazu der Sensor 120, der Daten verkaufen möchte, bei den Wächtern 104, 106, 108, 110, dass die Wächter 104, 106, 108, 110 gemeinsam den öffentlichen Schlüssel 132 und Anteile 134, 136, 138, 140 des Entschlüsselungsschlüssels erzeugen und diese lokal bei sich selbst speichern.

Als zweites erzeugen die Wächter 104, 106, 108, 110 gemeinsam ein öffentliches, privates Schlüsselpaar, senden den öffentlichen Schlüssel 132 zu dem oder den Sensoren 120 und speichern die Anteile 134, 136, 138, 140 lokal.

Als drittes verschlüsselt der Sensor 120 die Daten und schreibt den verschlüsselten Wert, in Fig. 1 als verschlüsselte persönliche Daten 150 bezeichnet, auf das Datenbrett 124.

Als viertes fordert der Käufer 122 die Daten an und zahlt für sie.

Als fünftes überprüfen die Wächter 104, 106, 108, 110, dass die Zahlung 142 in Ordnung ist, und dass die Transaktion nicht die Grundsätze des Marktes verletzt. Sofern korrekt, senden Sie genügend Anteile 134, 136, 138, 140 zu dem Käufer 122, der die Daten 150 liest und sie entschlüsselt. Falls der Sensor 120 versucht, die gleichen Daten an einen weiteren Käufer zu veräußern, werden die Wächter 104, 106, 108, 110 diese Transaktion blockieren. Solange wenige (Anzahl hängt von Threshold-Verfahren ab) der Wächter 104, 106, 108, 110 kompromittiert sind, werden alle nicht kompromittierten Wächter sich weigern ihre Anteile 134, 136, 138, 140 des Entschlüsselungsschlüssels an den weiteren Käufer weiterzugeben. Um zu erkennen, dass die Daten 150 bereits einmal verkauft wurden, können geeignete Verfahren eingesetzt werden. Beispielsweise können die Daten 150 dazu mit einem eindeutigen Zeiger versehen sein, der es dem Käufer 122 zum einen ermöglicht, die Daten 150 von dem Datenbrett 124 abzurufen als auch ermöglicht, die zur Entschlüsselung benötigten Anteile von den Wächtern 104, 106, 108, 110 abzurufen. Durch eine Überprüfung des Zeigers können die Wächtern 104, 106, 108, 110 feststellen, ob die Daten 150 erstmalig abgerufen werden.

Um die Daten im Datenbrett 124 zu verkaufen, ist gemäß einem Ausführungsbeispiel jeder Record, also beispielsweise jeder Dateneintrag, mit einem Zeiger versehen. Somit können alle in dem Datenbrett 124 zwischengespeicherte Daten 150 mit einem eindeutigen Zeiger versehen sein.

Der Zeiger kann ein Index oder das Ergebnis einer Hashfunktion sein, beispielsweise über die jeweiligen Daten 150 sein. Damit wird der Käufer 122 in der Lage sein, die Daten 150 aus dem Datenbrett 124 herunter zu laden und anschließend die Wächter 104, 106, 108, 110 nach dem Entschlüsselungsschlüssel fragen. Damit werden die Wächter 104, 106, 108, 110 diesen Versuch erkennen. Daher ist es gemäß einem Ausführungsbeispiel wichtig, dass die Käufer 122 und Verkäufer nicht direkt in Kontakt kommen.

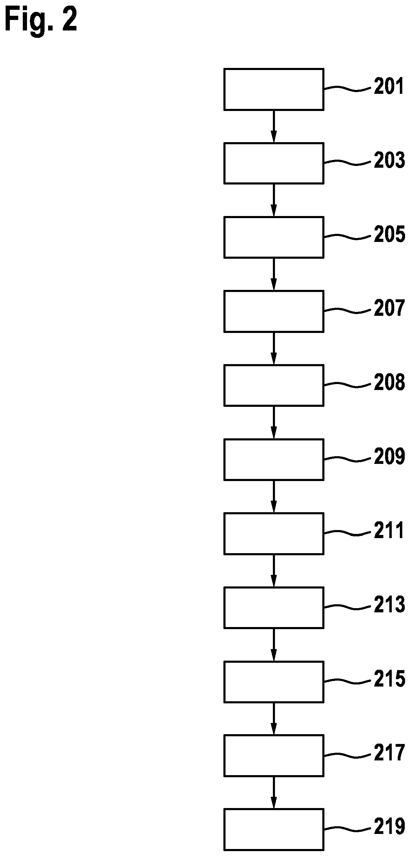

Fig. 2 zeigt ein Ablaufdiagramm eines Verfahrens zum Übertragen persönlicher Daten gemäß einem Ausführungsbeispiel. Die Schritte des Verfahrens können von Einrichtungen der anhand von Fig. 1 beschriebenen Vorrichtung ausgeführt werden.

In einem Schritt 201 wird eine Anfrage einer Sensoreinrichtung zum Erfassen persönlicher Daten über eine Sensorschnittstelle einer Gruppe von Wächtereinrichtungen zu der Sensoreinrichtung empfangen. Ansprechend auf den Empfang der Anfrage werden von den Wächtereinrichtungen in einem Schritt 203 ein Verschlüsselungsschlüssel sowie Anteile eines Entschlüsselungsschlüssels erzeugt. Der erzeugte Verschlüsselungsschlüssel wird in einem Schritt 205 an die Sensoreinrichtung bereitgestellt. Ebenso werden die erzeugten Anteile des Entschlüsselungsschlüssels in einem Schritt 207 an eine Endeinrichtung bereitgestellt. Dabei werden die Anteile nur bereitgestellt, wenn die persönlichen Daten erstmalig verkauft werden. Wird unter Verwendung der Wächtereinrichtungen festgestellt, dass die persönlichen Daten bereits verkauft wurden oder mehrfach verkauft werden sollen, so wird der Schritt 207 des Bereitstellens durch einen Schritt 208 blockiert. Um überprüfen zu können, ob die persönlichen Daten bereits verkauft würden, können die in der Datenbretteinrichtung gespeicherten verschlüsselten persönlichen Daten mit einem Zeiger versehen sein, der es der Endeinrichtung ermöglich, die verschlüsselten persönlichen Daten von der Datenbretteinrichtung zu laden. Der Zeiger kann von der Endeinrichtung zudem genutzt werden, um eine Anfrage zur Bereitstellung der Anteile des Entschlüsselungsschlüssels an die Wächtereinrichtungen zu stellen. Somit sind die Wächtereinrichtungen gemäß einem Ausführungsbeispiel ausgebildet, um im Schritt 208 den von der Endeinrichtung bereitgestellten Zeiger zu verwenden, um zu überprüfen, ob die persönlichen Daten zuvor bereits an einen Käufer verkauft wurden. Stellen die Wächtereinrichtungen fest, dass die persönlichen Daten bereits verkauft wurden, so sind die Wächtereinrichtungen ausgebildet, um die Bereitstellung der Anteile zu blockieren.

Gemäß einem Ausführungsbeispiel werden die persönlichen Daten von der Sensoreinrichtung in einem Schritt 209 unter Verwendung des Verschlüsselungsschlüssels zu verschlüsselten persönlichen Daten verschlüsselt, um die verschlüsselten persönlichen Daten an eine Datenbretteinrichtung bereitstellen zu können. Die verschlüsselten persönlichen Daten werden von der Datenbretteinrichtung in einem Schritt 211 empfangen und zeitlich direkt anschließend oder zu einem späteren Zeitpunkt in einem Schritt 213 zu der Endeinrichtung übermittelt.

Gemäß einem Ausführungsbeispiel werden die verschlüsselten persönlichen Daten nach Erhalt durch die Endeinrichtung in einem Schritt 215 von der Endeinrichtung entschlüsselt. Dazu verwendet die Endeinrichtung die von der Gruppe von Wächtereinrichtungen bereitgestellten Anteile des Entschlüsselungsschlüssels.

Gemäß einem Ausführungsbeispiel gibt die Endeinrichtung in einem Schritt 217 eine Bezahlanweisung an eine Transaktionseinrichtung aus. Die Transaktionseinrichtung empfängt die Bezahlanweisung in einem Schritt 219. Die Schritte 217, 219 können zu geeigneten Zeitpunkten des Verfahrens ausgeführt werden, beispielsweise auch nach Ausführung des Schrittes 211.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren zum Übertragen persönlicher Daten, wobei das Verfahren die folgenden Schritte umfasst:
Empfangen (201) einer durch ein elektrisches Signal repräsentierten Anfrage (130) einer Sensoreinrichtung (120) zum Erfassen persönlicher Daten über eine Sensorschnittstelle (112) einer Gruppe (102) von Wächtereinrichtungen (104, 106, 18, 110) zu der Sensoreinrichtung (120);
Erzeugen (203) eines Verschlüsselungsschlüssels (132) sowie von Anteilen (134, 136, 138, 140) eines Entschlüsselungsschlüssels unter Verwendung der Gruppe (102) von Wächtereinrichtungen (104, 106, 18, 110), ansprechend auf das Empfangen der Anfrage (130), wobei der Entschlüsselungsschlüssel unter Verwendung eines Verfahrens zur Geheimnisteilung auf die Anteile (134, 136, 138, 140) aufgeteilt wird und jedem der Gruppe (102) von Wächtereinrichtungen (104, 106, 18, 110) einer der Anteile (134, 136, 138, 140) zugewiesen wird;
Bereitstellen (205) des Verschlüsselungsschlüssels (132) an die Sensoreinrichtung (120) über die Sensorschnittstelle (112);
Bereitstellen (207) der Anteile (134, 136, 138, 140) des Entschlüsselungsschlüssels an eine Endeinrichtung (122) über eine Endschnittstelle (114) der Gruppe (102) von Wächtereinrichtungen (104, 106, 108, 110) zu der Endeinrichtung (122)
Generieren (209) verschlüsselter persönlicher Daten (150) durch die Sensoreinrichtung (120) unter Verwendung der persönlichen Daten und des Verschlüsselungsschlüssels (132);
Empfangen (211) der verschlüsselten persönlichen Daten (150) über eine Eingangsschnittstelle (152) einer Datenbretteinrichtung (124) zu der Sensoreinrichtung (120); und
Bereitstellen (213) der verschlüsselten persönlichen Daten (150) über eine Ausgangsschnittstelle (154) der Datenbretteinrichtung (124) zu der Endeinrichtung (122);
**dadurch gekennzeichnet, dass**
die verschlüsselten persönlichen Daten (150) mit einem eindeutigen Zeiger versehen sind, der ein Index oder das Ergebnis einer Hashfunktion über die verschlüsselten persönlichen Daten (150) ist, und das Verfahren einen Schritt (208) des Blockierens des Bereitstellens (207) der Anteile (134, 136, 138, 140) des Entschlüsselungsschlüssels an die Endeinrichtung (122) umfasst, wenn eine Überprüfung des Zeigers durch die Gruppe (102) von Wächtereinrichtungen (104, 106, 108, 110) ergibt, dass die persönlichen Daten bereits an eine weitere Endeinrichtung veräußert wurden.

2. Verfahren gemäß Anspruch 1, mit einem Schritt (215) des Entschlüsselns der verschlüsselten persönlichen Daten (150) unter Verwendung der Anteile (134, 136, 138, 140) des Entschlüsselungsschlüssels durch die Endeinrichtung (122).

3. Verfahren gemäß einem der vorangegangenen Ansprüche, mit einem Schritt (217) des Ausgebens einer Bezahlanweisung (142) durch die Endeinrichtung (122).

4. Verfahren gemäß Anspruch 3, mit einem Schritt (219) des Empfangens der Bezahlanweisung (142) durch eine Transaktionseinrichtung (126) über eine Schnittstelle der Transaktionseinrichtung (126) zu der Endeinrichtung (122).

5. Vorrichtung (100) zum Übertragen persönlicher Daten, wobei die Vorrichtung eingerichtet ist, um Schritte des Verfahrens gemäß einem der vorangegangenen Ansprüche in entsprechenden Einheiten auszuführen.

6. Computerprogramm, das dazu eingerichtet ist, das Verfahren gemäß einem der vorangegangenen Ansprüche auszuführen.

7. Maschinenlesbares Speichermedium, auf dem das Computerprogramm nach Anspruch 6 gespeichert ist.

## Claims

1. Method for transmitting personal data, wherein the method comprises the following steps:
receiving (201) a request (130), which is represented by an electrical signal, from a sensor device (120) for recording personal data via a sensor interface (112) of a group (102) of watchdog devices (104, 106, 18, 110) to the sensor device (120);
producing (-203) an encryption key (132) and shares (134, 136, 138, 140) of a decryption key by using the group (102) of watchdog devices (104, 106, 18, 110), in response to the reception of the request (130), wherein the decryption key is split into the shares (134, 136, 138, 140) by using a method for secret sharing, and one of the shares (134, 136, 138, 140) is assigned to each one of the group (102) of watchdog devices (104, 106, 18, 110) ;
providing (205) the encryption key (132) to the sensor device (120) via the sensor interface (112);
providing (207) the shares (134, 136, 138, 140) of the decryption key to a terminal device (122) via a terminal interface (114) of the group (102) of watchdog devices (104, 106, 108, 110) to the terminal device (122);
the sensor device (120) generating (209) encrypted personal data (150) by using the personal data and the encryption key (132);
receiving (211) the encrypted personal data (150) via an input interface (152) of a data board device (124) to the sensor device (120); and
providing (213) the encrypted personal data (150) via an output interface (154) of the data board device (124) to the terminal device (122);
**characterized in that**
the encrypted personal data (150) are provided with a unique pointer, which is an index or the result of a hash function on the encrypted personal data (150), and the method comprises a step (208) of blocking the provision (207) of the shares (134, 136, 138, 140) of the decryption key to the terminal device (122) if a check on the pointer by the group (102) of watchdog devices (104, 106, 108, 110) reveals that the personal data have already been sold to another terminal device.

2. Method according to Claim 1, comprising a step (215) of the terminal device (122) decrypting the encrypted personal data (150) by using the shares (134, 136, 138, 140) of the decryption key.

3. Method according to either of the preceding claims, comprising a step (217) of the terminal device (122) issuing a payment instruction (142).

4. Method according to Claim 3, comprising a step (219) of a transaction device (126) receiving the payment instruction (142) via an interface of the transaction device (126) to the terminal device (122).

5. Apparatus (100) for transmitting personal data, wherein the apparatus is designed to carry out steps of the method according to one of the preceding claims in corresponding units.

6. Computer program, which is designed to carry out the method according to one of the preceding claims.

7. Machine-readable storage medium, on which the computer program according to Claim 6 is stored.

## Revendications

1. Procédé permettant de transmettre des données personnelles, le procédé comprenant les étapes suivantes consistant à :
recevoir (201) une demande (130) représentée par un signal électrique d'un dispositif capteur (120) pour détecter des données personnelles par l'intermédiaire d'une interface de capteur (112) d'un groupe (102) de dispositifs de surveillance (104, 106, 18, 110) avec le dispositif capteur (120);
générer (203) une clé de cryptage (132) ainsi que des fractions (134, 136, 138, 140) d'une clé de décryptage en utilisant le groupe (102) de dispositifs de surveillance (104, 106, 18, 110) en réaction à la réception de la demande (130), la clé de décryptage étant répartie sur les fractions (134, 136, 138, 140) en utilisant un procédé de partage de secret, et l'une des fractions (134, 136, 138, 140) étant attribuée à chacun du groupe (102) de dispositifs de surveillance (104, 106, 18, 110) ;
fournir (205) la clé de cryptage (132) au dispositif capteur (120) par l'intermédiaire de l'interface de capteur (112) ;
fournir (207) les fractions (134, 136, 138, 140) de la clé de décryptage à un dispositif terminal (122) par l'intermédiaire d'une interface terminale (114) du groupe (102) de dispositifs de surveillance (104, 106, 108, 110) avec le dispositif terminal (122) ;
générer (209) des données personnelles cryptées (150) par le dispositif capteur (120) en utilisant les données personnelles de la clé de cryptage (132) ;
recevoir (211) les données personnelles cryptées (150) par l'intermédiaire d'une interface d'entrée (152) d'un dispositif de passerelle de données (124) avec le dispositif capteur (120) ; et
fournir (213) au dispositif terminal (122) les données personnelles cryptées (150) par l'intermédiaire d'une interface de sortie (154) du dispositif de la passerelle de données (124) ;
**caractérisé en ce que**
les données personnelles cryptées (150) sont munies d'un pointeur univoque qui est un indice ou le résultat d'une fonction de hachage concernant les données personnelles cryptées (150), et le procédé comprend une étape (208) consistant à bloquer la fourniture (207) des fractions (134, 136, 138, 140) de la clé de décryptage au dispositif terminal (122) si une vérification du pointeur par le groupe (102) de dispositifs de surveillance (104, 106, 108, 110) aboutit à ce que les données personnelles ont déjà été publiées à destination d'un autre dispositif terminal.

2. Procédé selon la revendication 1, comprenant une étape (215) consistant à décrypter les données personnelles cryptées (150) en ce que le dispositif terminal (122) utilise les fractions (134, 136, 138, 140) de la clé de décryptage.

3. Procédé selon l'une quelconque des revendications précédentes, comprenant une étape (217) consistant à sortir une instruction de paiement (142) par le dispositif terminal (122).

4. Procédé selon la revendication 3, comprenant une étape (219) consistant à recevoir l'instruction de paiement (142) par un dispositif de transaction (126) par l'intermédiaire d'une interface du dispositif de transaction (126) avec le dispositif terminal (122).

5. Dispositif (100) permettant de transmettre des données personnelles, le dispositif étant aménagé pour effectuer des étapes du procédé selon l'une quelconque des revendications précédentes dans des unités correspondantes.

6. Programme informatique qui est aménagé pour effectuer le procédé selon l'une quelconque des revendications précédentes.

7. Support de stockage lisible par machine sur lequel est stocké le programme informatique selon la revendication 6.
